(19) Europäisches Patentamt
European Patent Office
Office européen des brevets

(11) EP 1 378 769 A2

(12) # EUROPEAN PATENT APPLICATION

(43) Date of publication:
07.01.2004 Bulletin 2004/02

(51) Int Cl.[7]: **G02B 1/04**, C08F 230/08

(21) Application number: 03253998.3

(22) Date of filing: 25.06.2003

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 03.07.2002 JP 2002194441

(71) Applicant: Menicon Co., Ltd.
Nagoya-shi Aichi-ken (JP)

(72) Inventor: Ichihara, Masuji, c/o Menicon Co., Ltd.
Kasugai-shi, Aichi-ken (JP)

(74) Representative: Paget, Hugh Charles Edward et al
MEWBURN ELLIS
York House
23 Kingsway
London WC2B 6HP (GB)

(54) **Water-absorptive contact lens and method of producing the same**

(57) A water-absorptive contact lens whose water content is in a range from 10% to 60% and which is formed of a polymeric material obtained by copolymerization of a polymerizable monomer composition that includes: (A) 20 to 70 wt.% of alkoxypolyethylene glycol (meth)acrylate having at least three ethylene glycol units, and (B) 30 to 80 wt.% of a silicon-containing macromonomer.

EP 1 378 769 A2

Printed by Jouve, 75001 PARIS (FR)

## Description

BACKGROUND OF THE INVENTION

Field of the Invention

The present invention relates to a water-absorptive contact lens and a method of producing the same. More particularly, the present invention relates to a water-absorptive contact lens which assures a lens wearer of a high degree of safety and which is not likely to be stained with oily deposits during wearing of the contact lens on the lens wearer's eye, and an advantageous method of producing such a water-absorptive contact lens.

Discussion of Related Art

As well known, a contact lens is classified into a soft contact lens and a hard contact lens. Both of the soft and hard contact lenses are needed to have a high degree of permeability to oxygen, so that a sufficient amount of oxygen is supplied to a cornea of an eye on which the contact lens is worn. In recent years, there have been increasing demands for a soft contact lens which assures a lens wearer of excellent wearing comfort, especially a disposable soft contact lens, in view of a fact that a lens wearer feels an acute pain in his/her eye if foreign matters get into the eye on which the hard contact lens is worn.
It has been known that a contact lens formed of a silicon-containing material has a high degree of oxygen permeability. In particular, a copolymer of a silicon-containing macromonomer, N-vinylpyrrolidone, and/or dimethyl acrylamide gives a water-absorptive, high oxygen permeable lens by hydration. Accordingly, various studies have been made on such a copolymer.
A contact lens formed of a copolymer of the silicon-containing macromonomer and the N-vinylpyrrolidone, however, suffers from whitening or clouding after hydration since the silicon-containing macromonomer and the N-vinyl pyrrolidone are not homogeneously polymerized. Further, a large amount of an extracted or stripped material(s) from the contact lens is/are detected after the contact lens formed of the copolymer has been subjected to a boiling treatment, undesirably giving rise to a problem of insufficient safety to the living body. Moreover, it has been pointed out that the N-vinylpyrrolidone may have a risk of causing a cancer.
A contact lens formed of a copolymer of the silicon-containing macromonomer and the dimethyl acrylamide does not suffer from whitening or clouding after hydration. It is further known that the amount of a material(s) released or extracted from the contact lens after the contact lens has been subjected to a boiling treatment is relatively small. It is not clear whether such a characteristic is attributed to a fact that the dimethyl acrylamide is a solvent which exhibits a relatively high degree of affinity for both water and oil. In fact, if the contact lens formed of the copolymer is immersed in oils and fats such as oleic acid, the contact lens is considerably swollen with the oils and fats. Thus, the contact lens formed of the copolymer of the silicon-containing macromonomer and the dimethyl acrylamide is likely to be stained with oily deposits which adhere to the lens during wearing of the lens on the lens wearer's eye.
JP-A-7-505169 discloses a copolymer of the silicon-containing macromonomer, the N-vinylpyrrolidone, and the dimethyl acrylamide. While the disclosed copolymer does not suffer from whitening or clouding after hydration, a large amount of an extracted material(s) is/are detected from the copolymer after the copolymer has been subjected to a boiling treatment, giving rise to a problem of insufficient safety. Further, the N-vinylpyrrolidone which is released or extracted from the copolymer after the boiling treatment appears to be carcinogenic. In this respect, the disclosed copolymer has a serious problem in its safety. In addition, a contact lens formed of the disclosed copolymer may be stained with oily deposits which adhere to the lens during wearing of the lens on the lens wearer's eye since the lens is swollen with oils and fats such as oleic acid if the amount of the dimethyl acrylamide to be used increases.

SUMMARY OF THE INVENTION

The present invention has been developed in the light of the background art situations described above. It is therefore an object of the invention to provide a water-absorptive contact lens having a water content in a range from 10% to 60% which is free from the conventionally experienced problems arising from the use of the above-described N-vinylpyrrolidone and the dimethyl acrylamide, which assures a high degree of safety and a high degree of freedom from a large amount of a material (s) released from the contact lens after the contact lens has been subjected to a boiling treatment, and which is not considerably swollen with oils and fats such as oleic acid even if the contact lens is immersed in the oils and fats, so that the contact lens is not stained with oily deposits during wearing of the lens on a lens wearer's eye. It is an optional object of the invention to provide an advantageous method of producing such a water-absorptive contact lens having excellent characteristics described above.
As a result of an extensive study by the inventor of the present invention, it has been found that a combined

use of alkoxypolyethylene glycol (meth)acrylate having at least three ethylene glycol units and a silicon-containing macromonomer as main constituent components of a polymer or polymeric material permits a contact lens to be obtained to have a water content in a range from 10 % to 60% without using the conventional N-vinylpyrrolidone. Further, it has also been found that the contact lens formed of the polymeric material is less likely to suffer from a large amount of an extracted material(s) after the contact lens has been subjected to a boiling treatment and that the contact lens is not considerably swollen with oils and fats such as oleic acid even if the contact lens is immersed in the oils and fats, so that the contact is not likely to be stained with oily deposits during wearing of the contact lens on a lens wearer's eye.

The above-indicated object of the present invention may be attained according to a first aspect of the invention, which provides a water-absorptive contact lens whose water content is in a range from 10% to 60% and which is formed of a polymeric material obtained by copolymerization of a polymerizable monomer composition that includes: (A) 20 to 70 wt.% of alkoxypolyethylene glycol (meth)acrylate having at least three ethylene glycol units, and (B) 30 to 80 wt. % of a silicon-containing macromonomer.

The present water-absorptive contact lens constructed according to the above-indicated first aspect of the invention is formed of the polymeric material which is obtained by copolymerization of the polymerizable monomer composition that includes (A) alkoxypolyethylene glycol (meth)acrylate having at least three ethylene glycol units and (B) silicon-containing macromonomer. The alkoxypolyethylene glycol (meth)acrylate having at least three ethylene glycol units present in the polymeric material is effective to give a good water-absorptive property to the polymeric material, namely the contact lens formed of the polymeric material, while the silicon-containing macromonomer present in the polymeric material is effective to give excellent oxygen permeability to the polymeric material, namely the contact lens. Since the alkoxypolyethylene glycol (meth)acrylate having at least three ethylene glycol units has good copolymerizability with respect to the silicon-containing macromonomer, the amount of a material(s) released from the contact lens after the contact lens has been subjected to a boiling treatment is small, so that the contact lens assures the lens wearer of a high degree of safety. Further, even if the contact lens is immersed in oils and fats such as oleic acid, the contact lens is not considerably swollen with the oils and fats, so that the contact lens is prevented from being stained with the oily deposits.

Accordingly, the present arrangement eliminates a need of using the conventionally used N-vinylpyrrolidone which has a risk of causing a cancer and which has poor copolymerizability with the silicon-containing macromonomer, for thereby providing a contact lens with a sufficiently high degree of safety.

In the present water-absorptive contact lens formed of the polymeric material obtained by copolymerization of the polymerizable monomer composition wherein the alkoxypolyethylene glycol (meth)acrylate having at least three ethylene glycol units and the silicon-containing macromonomer are included in the respective prescribed amounts, the water content of the contact lens is held in a range from 10% to 60%, so that the contact lens can be effectively prevented from adhering to the cornea of the lens wearer's eye while exhibiting excellent oxygen permeability. If the water content of the contact lens is less than 10%, the contact lens is pressed onto the cornea upon blinking of the eye even in the presence of a tear fluid layer between the contact lens and the cornea. In this case, the contact lens may adhere or stick to the cornea like a sucker. On the other hand, if the water content of the contact lens exceeds 60%, the oxygen permeability of the contact lens is lowered, so that the effect to be favorably exhibited by the silicon-containing macromonomer cannot be obtained. Further, unlike the conventional contact lens formed by using the N-vinylpyrrolidone, the present contact lens does not suffer from whitening or clouding after the contact lens has been subjected to a hydration treatment conducted for giving the water-absorptive property to the contact lens.

The above-indicated object of the present invention may be attained according to a second aspect of the invention, which provides a water-absorptive contact lens whose water content is in a range from 10% to 60% and which is formed of a polymeric material obtained by copolymerization of a polymerizable monomer composition that includes: (A) 20 to 70 wt.% of alkoxypolyethylene glycol (meth)acrylate having at least three ethylene glycol units, (B) 10 to 70 wt.% of a silicon-containing macromonomer, and (C) 1 to 50 wt.% of a silicon-containing monomer different from the slilicon-containing macromonomer, and/or fluorine-containing alkyl(meth)acrylate.

The water-absorptive contact lens constructed according to the second aspect of the present invention enjoys the above-described advantages owing to the combined use of (A) the alkoxypolyethylene glycol (meth)acrylate having at least three ethylene glycol units and (B) the silicon-containing macromonomer. In addition, the compatibility between the alkoxypolyethylene glycol (meth)acrylate having at least three ethylene glycol units and the silicon-containing macromonomer is improved owing to the addition of the non-macromolecular (or low-molecular) silicon-containing monomer different from the aforementioned silicon-containing macromonomer. Accordingly, a homogeneous contact lens can be obtained. Further, the silicon-containing monomer is effective to adjust the hardness of the polymeric (copolymer) material that gives the contact lens while permitting the contact lens to exhibit excellent oxygen permeability.

The fluorine-containing alkyl (meth)acrylate is effective to improve the solubility of oxygen into the polymeric material for increasing the degree of oxygen permeability of the contact lens. In addition, the contact lens is not likely to be stained with lipid deposits, etc., owing to the hydrophobicity and the olephobicity of the fluorine-containing alkyl

(meth)acrylate.

The above-indicated object of the invention may be attained according to a third aspect of the invention, which provides a water-absorptive contact lens whose water content is in a range from 10% to 60% and which is formed of a polymeric material obtained by copolymerization of a polymerizable monomer composition that includes: (A) 19 to 69 wt.% of alkoxypolyethylene glycol (meth)acrylate having at least three ethylene glycol units, (B) 10 to 70 wt.% of a silicon-containing macromonomer, (C) 1 to 50 wt.% of a silicon-containing monomer different from the slilicon-containing macromonomer, and/or fluorine-containing alkyl(meth)acrylate, and (D) 1 to 50 wt.% of dimethyl acrylamide, a total amount of the alkoxypolyethylene glycol (meth)acrylate having at least three ethylene glycol units and the dimethyl acrylamide being in a range from 20 wt.% to 70 wt.%.

The water-absorptive contact lens constructed according to the third aspect of the present invention enjoys the above-described advantages owing to the combined use of (A) the alkoxypolyethylene glycol (meth)acrylate having at least three ethylene glycol units, (B) the silicon-containing macromonomer, and (C) the silicon-containing monomer and/or the fluorine-containing alkyl (meth)acrylate. In addition, the components of the polymerizable monomer composition can be uniformly and homogeneously mixed with each other owing to the addition of the prescribed amount of the dimethyl acrylamide which exhibits excellent compatibility with respect to both the alkoxypolyethylene glycol (meth)acrylate having at least three ethylene glycol units and the silicon-containing macromonomer. Accordingly, the use of the prescribed amount of the dimethyl acrylamide is effective to render the contact lens to be obtained homogeneous.

In one preferred form of the above-described first through third aspects of the invention, the alkoxypolyethylene glycol (meth)acrylate having at least three ethylene glycol units is methoxy triethylene glycol acrylate.

In another preferred form of the above-described first through third aspects of the invention, the silicon-containing macromonomer is a polysiloxane macromonomer represented by the following formula (I):

$$A^1—U^1—(—S^1—U^2—)_n—S^2—U^3—A^2 \quad (I)$$

wherein $A^1$ is a group represented by the following formula (II):

$$Y^{21}—Z^{21}—R^{31}— \quad (II)$$

wherein $Y^{21}$ is an acryloyl group, a vinyl group or an allyl group, $Z^{21}$ is an oxygen atom or a direct bond, and $R^{31}$ is a direct bond or a linear, a branched, or an aromatic alkylene group having 1 to 12 carbon atoms;
$A^2$ is a group represented by the following formula (III):

$$—R^{34}—Z^{22}—Y^{22} \quad (III)$$

wherein $Y^{22}$ is an acryloyl group, a vinyl group, or an allyl group, $Z^{22}$ is an oxygen atom or a direct bond, and $R^{34}$ is a direct bond or a linear, a branched, or an aromatic alkylene group having 1 to 12 carbon atoms, where $Y^{21}$ in the formula (II) and $Y^{22}$ in the formula (III) may be the same or different;
$U^1$ is a group represented by the following formula (IV):

$$—X^{21}—E^{21}—X^{25}—R^{32}— \quad (IV)$$

wherein each of $X^{21}$ and $X^{25}$ is independently selected from a direct bond, an oxygen atom, and an alkylene glycol group, $E^{21}$ is -NHCO- group (in this case, $X^{21}$ is a direct bond, $X^{25}$ is an oxygen atom or an alkylene glycol group, and $E^{21}$ and $X^{25}$ form a urethane bond), -CONH- group (in this case, $X^{21}$ is an oxygen atom or an alkylene glycol group, $X^{25}$ is a direct bond, and $E^{21}$ and $X^{21}$ forms a urethane bond), or a divalent group derived from a diisocyanate selected from the group consisting of a saturated or an unsaturated aliphatic diisocyanate, an alicyclic diisocyanate, and an aromatic diisocyanate (in this case, each of $X^{21}$ and $X^{25}$ is independently selected from an oxygen atom and an alkylene glycol group, and $E^{21}$ forms two urethane bonds between $X^{21}$ and $X^{25}$), and $R^{32}$ is a linear or a branched alkylene group having 1 to 6 carbon atoms;
each of $S^1$ and $S^2$ is independently a group represented by the following formula (V):

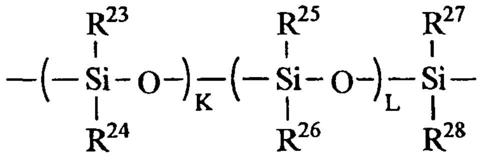
........ (V)

wherein each of $R^{23}$, $R^{24}$, $R^{25}$, $R^{26}$, $R^{27}$, and $R^{28}$ is independently an alkyl group having 1 to 6 carbon atoms, a fluorinated alkyl group, or a phenyl group, K is an integer of 1 to 1500, L is 0 or an integer of 1 to 1499, and K+L is an integer of 1 to 1500;
$U^2$ is a group represented by the following formula (VI):

$$-R^{37}-X^{27}-E^{24}-X^{28}-R^{38}- \qquad (VI)$$

wherein each of $R^{37}$ and $R^{38}$ is independently a linear or a branched alkylene group having 1 to 6 carbon atoms, each of $X^{27}$ and $X^{28}$ is independently an oxygen atom or an alkylene glycol group, $E^{24}$ is a divalent group derived from a diisocyanate selected from the group consisting of a saturated or an unsaturated aliphatic diisocyanate, an alicyclic diisocyanate, and an aromatic diisocyanate (in this case, $E^{24}$ forms two urethane bonds between $X^{27}$ and $X^{28}$);
$U^3$ is a group represented by the following formula (VII):

$$-R^{33}-X^{26}-E^{22}-X^{22}- \qquad (VII)$$

wherein $R^{33}$ is a linear or a branched alkylene group having 1 to 6 carbon atoms, each of $X^{22}$ and $X^{26}$ is independently selected from a direct bond, an oxygen atom, and an alkylene glycol group, $E^{22}$ is -NHCO- group (in this case, $X^{22}$ is an oxygen atom or an alkylene glycol group, $X^{26}$ is a direct bond, and $E^{22}$ and $X^{22}$ form a urethane bond), -CONH- group (in this case, $X^{22}$ is a direct bond, $X^{26}$ is an oxygen atom or an alkylene glycol group, and $E^{22}$ and $X^{26}$ form a urethane bond), or a divalent group derived from a diisocyanate selected from the group consisting of a saturated or an unsaturated aliphatic diisocyanate, an alicyclic diisocyanate, and an aromatic diisocyanate (in this case, each of $X^{22}$ and $X^{26}$ is independently an oxygen atom or an alkylene glycol group, and $E^{22}$ forms two urethane bonds between $X^{22}$ and $X^{26}$); and
n is 0 or an integer of 1 to 10.

The above-indicated object of the invention relating to the method of producing a water-absorptive contact lens may be attained according to another aspect of the invention, which provides a method of producing a water-absorptive contact lens according to any one of the above-described first through third aspects of the invention, the method comprising the steps of preparing a polymerizable monomer composition which at least includes (A) alkoxypolyethylene glycol (meth)acrylate having at least three ethylene glycol units and (B) a silicon-containing macromonomer; introducing the polymerizable monomer composition into a vessel or a mold cavity; copolymerizing the polymerizable monomer composition by photo-polymerization or heat-polymerization to obtain a copolymer; and subjecting the obtained copolymer to a hydration treatment. According to the present method, a contact lens having the characteristics described above can be advantageously produced.

In the present specification, " • • • (meth)acrylate" is generic to the following two compounds: "• • • acrylate" and " • • • methacrylate".

DETAILED DESCRIPTION OF PREFERRED EMBODIMENTS

The water-absorptive contact lens according to the present invention is formed of a polymeric material obtained by copolymerization of a polymerizable monomer composition which at least includes (A) alkoxypolyethylene glycol (meth)acrylate having at least three ethylene glycol units, i.e. oxyethylene group ($-OCH_2CH_2-$) and (B) a silicon-containing macromonomer. The alkoxypolyethylene glycol (meth)acrylate having at least three ethylene glycol units is hereinafter referred to as "component A" while the silicon-containing macromonomer is hereinafter referred to as "component B". The water-absorptive contact lens formed of the polymeric material described above has a water content in a range from 10% to 60% to prevent adhesion or sticking of the contact lens to the cornea while exhibiting excellent oxygen permeability.

If the water content of the contact lens is less than 10%, the contact lens is pressed onto the cornea by blinking of the eye even in the presence of the tear fluid layer between the contact lens and the cornea. In this case, the spacing

between the contact lens and the cornea is reduced, giving rise to a risk of adhesion or sticking of the contact lens to the cornea. On the other hand, if the water content of the contact lens exceeds 60%, the oxygen permeability of the contact lens is undesirably lowered, making it difficult to obtain a contact lens having the intended high oxygen permeability. More preferably, the water content of the contact lens is held in a range from 12% to 55%.

The water-absorptive property of the contact lens largely depends on the above-described component A as one of the essential components of the polymerizable monomer composition. The water content of the contact lens increases with an increase of a repeating number "a" of the ethylene glycol units (oxyethylene group: $-OCH_2CH_2-$), and with a decrease of a number of carbon atoms in an alkoxy group ($-OR^{82}$), in the following formula (VIII). Described in detail, where the number of carbon atoms in the alkoxy group is one (the lowest methoxy group), the water content is the highest. The water content decreases with an increase of the number of carbon atoms from two (ethoxy group) to three (propoxy group).

$$H_2C=CR^{81}CO\left(OCH_2CH_2\right)_aOR^{82} \quad \text{........ (VIII)}$$

wherein $R^{81}$ is a hydrogen atom or a methyl group, $R^{82}$ is a hydrocarbon group having 1 to 4 carbon atoms, and a is an integer of not smaller than 3.

To permit the contact lens to have the water content in a range from 10% to 60%, the repeating number "a" of the ethylene glycol units needs to be not smaller than 3. In view of this, it is not suitable to employ, as the component A, alkoxyethylene glycol (meth)acrylate and alkoxydiethylene glycol (meth)acrylate each having not greater than two ethylene glycol units, even if they are in the form of methoxydiethylene glycol (meth)acrylate and ethoxydiethylene glycol (meth)acrylate each having carbon atoms whose number is relatively small, since the contact lens to be obtained does not have a water content of not lower than 10%.

The component A has a higher polymerizability with respect to the component B (which will be described later), than the conventionally used N-vinylpyrrolidone. Accordingly, the polymeric material formed of the component A and the component B does not suffer from a large amount of extracted materials such as residual monomers even after the polymeric material has been subjected to a boiling treatment. Since the component A does not have a high degree of affinity for oil, the polymeric material is not considerably swollen with oils and fats such as oleic acid even if the polymeric material is immersed in the oils and fats. Accordingly, the polymeric material is effectively prevented from being stained with oily deposits. Further, the polymeric material formed of the component A and the component B does not suffer from whitening or clouding by a hydration treatment conducted for giving the water-absorptive property to the contact lens.

The component A is not particularly limited, as long as the component A is the alkoxypolyethylene glycol (meth)acrylate in which the repeating number "a" of the ethylene glycol units is not smaller than 3. However, the alkoxypolyethylene glycol (meth)acrylate in which the repeating number "a" of the ethylene glycol units is equal to, or larger than, 6 such as alkoxyhexaethylene glycol (meth)acrylate is not highly compatible with the component B and is not likely to be purified. In view of this, it is preferable to employ, as the component A, the alkoxypolyethylene glycol (meth) acrylate in which the repeating number "a" of the ethylene glycol units is held in a range from 3 to 5. Examples of the component A suitably employed in the present invention include alkoxytriethylene glycol (meth)acrylate such as methoxytriethylene glycol (meth)acrylate, ethoxytriethylene glycol (meth)acrylate or propoxytriethylene glycol (meth)acrylate; alkoxytetraethylene glycol (meth)acrylate such as methoxytetraethylene glycol (meth)acrylate, ethoxytetraethylene glycol (meth)acrylate, propoxytetraethylene glycol (meth)acrylate, or butoxytetraethylene glycol (meth)acrylate; and alkoxypentaethylene glycol (meth)acrylate such as methoxypentaethylene glycol (meth)acrylate, ethoxypentaethylene glycol (meth)acrylate, propoxypentaethylene glycol (meth)acrylate, or butoxypentaethylene glycol (meth)acrylate. It is preferable to use the methoxytriethylene glycol (meth)acrylate, methoxytetraethylene glycol (meth)acrylate, ethoxytetraethylene glycol (meth)acrylate, methoxypentaethylene glycol (meth)acrylate, or ethoxypentaethylene glycol (meth)acrylate. Particularly preferably used is the methoxytriethylene glycol (meth)acrylate since it has good compatibility with the component B and it can be purified by distillation under reduced pressure.

Any one of, or any combinations of, the compounds described above may be employed as the component A in the present invention.

The component B which is copolymerized with the component A and which is one of the essential components of the present polymerizable monomer composition is used for giving the oxygen permeability to the contact lens, as known in the art. As the component B, there may be used a macromonomer having various kinds of silicon (Si) bonds, more specifically, siloxane bonds.

Examples of the component B include silicon-containing macromonomers disclosed in JP-A-54-22487, JP-A-54-24047, JP-A-55-116728, JP-A-59-102914, JP-A-59-229524, JP-A-61-85442, JP-A-61-179217, JP-A-62-38419,

JP-A-63-85719, JP-A-63-130639, JP-A-63-253918, JP-A-63-297411, JP-A-1-254165, JP-A-1-254166, JP-A-2-115817, JP-A-2-180920, JP-A-2-188717, JP-A-2-269106, JP-A-3-206418, JP-A-3-43711, JP-A-3-228014, JP-A-4-46311, JP-A-4-50814, JP-A-4-268314, JP-A-9-132621, and WO 2001-71415. It is preferable to use the silicon-containing macromonomers having urethane bonds disclosed in the JP-A-54-22487, JP-A-59-102914, JP-A-63-297411, JP-A-2-115817, JP-A-2-188717, JP-A-4-50814, JP-A-4-268314, and WO 2001-71415. Particularly preferably used is a polysiloxane macromonomer disclosed in the WO 2001-71415 and represented by the above-described formula (I), wherein polymerizable groups are bonded to the siloxane main chain via at least one urethane bond having a high degree of elasticity or resilience. The siloxane portion of the polysiloxane macromonomer reinforces the polymeric material without deteriorating its oxygen permeability, and the urethane bond is effective to increase an elastic or resilient rebound property of the polymeric material, to thereby minimize the fragility of the polymeric material. Accordingly, the mechanical strength of the contact lens to be obtained can be improved.

Any one of, or any combinations of, the silicon-containing macromonomers disclosed in the above-described Publications may be employed as the component B in the present invention.

There will be described a water-absorptive contact lens constructed according to a first embodiment of the present invention. The water-absorptive contact lens of the first embodiment is formed of a polymeric material obtained by copolymerization of a two-component polymerizable monomer composition which at least includes the component A and the component B. The contact lens formed of the polymeric (copolymer) material is subjected to a hydration treatment by immersing the lens in water, so that the water-absorptive contact lens is obtained. Where the two-component polymerizable monomer composition is employed, the amount of the component A is held in a range from 20 wt.% to 70 wt.%, preferably in a range from 25 wt.% to 60 wt.% of the polymerizable monomer composition (all polymerizable components), while the amount of the component B is held in a range from 30 wt.% to 80 wt.%, preferably in a range from 40 wt.% to 75 wt.% of the polymerizable monomer composition (all polymerizable components).

If the amount of the component A is less than 20 wt.%, it is difficult to obtain the contact lens whose water content is not lower than 10%. If the amount of the component A exceeds 70 wt.%, on the other hand, the water content of the contact lens undesirably exceeds the upper limit of 60%. Further, the amount of the component A exceeding 70 wt.% undesirably decreases the amount of the component B included in the polymerizable monomer composition, making it difficult to uniformly mix the component A and the component B with each other. Where the component A and the component B are not uniformly mixed with each other, the components A and B may be dissolved in a suitable non-polymerizable solvent. Such a solvent, however, may deteriorate the polymerizability of the components A and B, so that the copolymer to be obtained does not have a sufficiently high molecular weight. If such a copolymer is subjected to a boiling treatment, a large amount of an extracted material may be detected or the mechanical strength of the contact lens to be obtained may be insufficient. In view of this, where the two-component polymerizable monomer composition is used for forming the contact lens, the amounts of the component A and the component B are suitably determined, depending upon the kinds of the components A and B to be used, such that those components A and B are not separated from each other.

There will be next described a water-absorptive contact lens constructed according to a second embodiment of the present invention. The water-absorptive contact lens of the second embodiment is formed of a polymeric material obtained by copolymerization of a three-component polymerizable monomer composition which includes, as a component C, a silicon-containing monomer (hereinafter referred to as "component C-1") different from the silicon-containing macromonomer as the component B described above, and/or a fluorine-containing alkyl (meth)acrylate (hereinafter referred to as "component C-2"), in addition to the above-described components A and B.

Described in detail, the component C included in the three-component polymerizable monomer composition is used as an auxiliary component for the component B that gives the oxygen permeability to the contact lens. Like the component B, the component C (the silicon-containing monomer and/or the fluorine-containing alkyl (meth)acrylate) does not give the water-absorptive property to the contact lens. In view of this, where the contact lens is formed by using the three-component polymerizable monomer composition, the amount of the component A is held in a range from 20 wt.% to 70 wt.%, preferably in a range from 25 wt.% to 60 wt.% of the polymerizable monomer composition (all polymeric components), the amount of the component B is held in a range from 10 wt.% to 70 wt.%, preferably in a range from 15 wt.% to 65 wt.% of the polymerizable monomer composition, and the amount of the component C is held in a range from 1 wt.% to 50 wt.%, preferably 2 to 45 wt.% of the polymerizable monomer composition.

As described above with respect to the two-component polymerizable monomer composition, it is difficult to provide the contact lens whose water content is not lower than 10% if the amount of the component A included in the three-component polymerizable monomer composition is less than 20 wt.%. If the amount of the component A exceeds 70 wt.%, on the other hand, the water content of the contact lens undesirably exceeds the upper limit of 60% or the amount of the component B included in the three-component polymerizable monomer composition is inevitably decreased.

If the amount of the component B included in the three-component polymerizable monomer composition is less than 10 wt.%, the contact lens to be obtained does not have a sufficiently high degree of oxygen permeability. In

addition, the contact lens does not enjoy the effect to be favorably provided by the addition of the component B such as resiliency. If the amount of the component B exceeds 70 wt.%, on the other hand, the amount of the component A is inevitably decreased. In this case, it is difficult to provide the contact lens whose water content is not lower than 10%, or the contact lens tends to be easily broken.

If the amount of the component C included in the three-component polymerizable monomer composition is less than 1 wt.%, the contact lens does not enjoy the effect (which will be described later) to be favorably provided by the addition of the component C. If the amount of the component C exceeds 50 wt.%, on the other hand, the tackiness of the surface of the contact lens is undesirably increased or the hardness of the contact lens is undesirably decreased, making the handling of the contact lens difficult.

Like the above-described component B (i.e., silicon-containing macromonomer), the component C-1 (i.e., the silicon-containing monomer different from the component B) is a polymerizable monomer having the siloxane bonds. Since the molecular weight of the component C-1 is smaller than that of the component B, the component C-1 is effective to improve the compatibility of the polymerizable components of the polymerizable monomer composition. The degree of olephobicity of the component A increases with an increase of the length of the polyethylene glycol chain, in other words, with an increase of the repeating number of the ethylene glycol units. In this case, the component A is less likely to uniformly or heterogeneously mix with the component B as the high-molecular oil. The component C-1 as the low-molecular oil is effective to increase the compatibility of the component A and the component B relative to each other, so that the contact lens to be obtained is homogeneous.

A homopolymer of the component C-1 tends to be generally soft while a homopolymer of the component B having a plurality of polymerizable groups tends to be generally hard since the component B functions as the crosslinking component. In view of this, the component C-1 is effective to adjust the hardness of the polymeric (copolymer) material that gives the contact lens to a desired degree while permitting the polymeric material to exhibit the desired high oxygen permeability.

As the component C-1, it is possible to use various known silicon-containing monomers conventionally used for the lens material, such as siloxanyl (meth)acrylate or siloxanyl styrene wherein pentamethyl disiloxymethyl group, bis(trimethylsiloxy) (methyl)silylmethyl group, bis(trimethylsiloxy) (methyl)silylpropyl group, tris(trimethylsiloxy) silylmethyl group, or tris(trimethylsiloxy) silylproplyl group is introduced into (meth)acrylate or styrene. It is particularly preferable to use bis(trimethylsiloxy) (methyl)silylpropyl (meth)acrylate or tris(trimethylsiloxy) silylpropyl (meth)acrylate, in view of ease of purification, oxygen permeability, availability, compatibility, etc.

Like the component C-1, the component C-2 (i.e., the fluorine-containing alkyl (meth)acrylate) is an auxiliary component for the component B. The effect to be provided by the component C-2 is more or less different from that of the component C-1. Described in detail, the component C-2 is effective to improve the solubility of oxygen into the polymeric material for increasing the degree of oxygen permeability of the polymeric material. In addition, the component C-2 reduces the tackiness of the surface of the contact lens and improves the anti-staining property of the contact lens owing to its hydrophobicity and olephobicity, for thereby preventing the contact lens from being stained with the lipid deposits, etc.

As the component C-2, it is possible to use any known fluorine-containing alkyl (meth)acrylates conventionally used for the lens material. Examples of the fluorine-containing alkyl (meth)acrylate include 2,2,2-trifluoroethyl (meth) acrylate, 2,2,3,3,3-pentafluoropropyl (meth)acrylate, (perfluorobutyl)ethyl (meth)acrylate, (perfluorohexyl)ethyl (meth) acrylate, (perfluorooctyl) ethyl (meth)acrylate, (perfluorodecyl)ethyl (meth)acrylate, and (perfluorododecyl)ethyl (meth) acrylate. It is needless to mention that the fluorine-containing alkyl (meth)acrylate as the component C-2 is not limited to those described above.

For permitting the contact lens to exhibit excellent oxygen permeability and have a suitable degree of flexibility or softness, it is preferable to use the fluorine-containing alkyl (meth)acrylate having a fluorinated portion of a large molecular weight. Examples of the fluorine-containing alkyl (meth)acrylate having a fluorinated portion of a large molecular weight includes the (perfluorohexyl)ethyl (meth)acrylate, (perfluorooctyl)ethyl (meth)acrylate, (perfluorodecyl) ethyl (meth)acrylate. It is particularly preferable to use the (perfluorooctyl)ethyl (meth)acrylate since it is commercially available and can be easily purified by distillation under reduced pressure.

At least one kind of the compounds described above as the component C-1 and the component C-2 is suitably selected as the component C which is included in the three-component polymerizable monomer composition. The component C-1 is effective to improve the compatibility of the component A and the component B relative to each other while the component C-1 tends to undesirably increase the tackiness of the surface of the contact lens. The component C-2 is effective to decrease the tackiness of the surface of the contact lens while the component C-2 reduces the compatibility of the component A and the component B. In view of this, it is preferable to use the component C-1 and the component C-2 in combination in order to offset or minimize the disadvantages of the two components C-1, C-2 and make use of the advantages of the two components C-1, C-2.

The above-described three-component polymerizable monomer composition which at least includes the component A, the component B, and the component C is copolymerized into a polymeric material that gives the contact

lens. The contact lens formed of the polymeric material is subjected to a hydration treatment, so that the intended water-absorptive contact lens can be obtained. Owing to the addition of the component C-1 and/or the component C-2, the hardness of the polymeric (copolymer) material for the contact lens can be advantageously adjusted, and the compatibility of the component A and the component B relative to each other is effectively improved, for thereby providing a homogeneous contact lens. Further, the contact lens exhibits the anti-staining property.

There will be next described a water-absorptive contact lens constructed according to a third embodiment of the present invention. The water-absorptive contact lens of the third embodiment is formed of a polymeric material obtained by copolymerization of a four-component polymerizable monomer composition which includes dimethyl acrylamide (hereinafter referred to as "component D"), in addition to the above described three components A, B, and C. The contact lens formed of the polymeric material obtained by copolymerization of the four-component polymerizable monomer composition is subjected to a hydration treatment, for thereby providing the intended water-absorptive contact lens according to the present invention.

More specifically described, the component D included in the four-component polymerizable monomer composition is an amphiphilic compound which is soluble in both water and oil, so that the component D functions as a compatibilizer that exhibits excellent compatibility with respect to both of the component A and the component B. Accordingly, in a case wherein the component A and component B are separated from each other due to the poor compatibility therebetween or in a case wherein the polymeric material to be obtained suffers from whitening even if the component A and the component B are not separated from each other, the component A and the component B can be uniformly mixed with each other owing to the addition of the prescribed amount of the component D. Accordingly, the contact lens to be obtained is homogeneous and has a high degree of transparency.

Like the component A, the component D gives the water-absorptive property to the contact lens. In view of this, where the contact lens is formed by using the four-component polymerizable monomer composition described above, the total amount of the component D and the component A is held in a range from 20 wt.% to 70 wt.%, preferably in a range from 25 wt.% to 60 wt.% of the polymerizable monomer composition (all polymerizable components). If the total amount of the component A and the component D is less than 20 wt.%, it is difficult to obtain the contact lens whose water content is not lower than 10%. If the total amount exceeds 70 wt.%, on the other hand, the water content of the contact lens undesirably exceeds the upper limit of 60% or the amount of the component B to be included in the polymerizable monomer composition is inevitably decreased.

More specifically described, the amount of the component A is held in a range from 19 wt.% to 69 wt.%, preferably in a range from 23 wt.% to 58 wt.% of the four-component polymerizable monomer composition (all polymerizable components), while the amount of the component D is held in a range from 1 wt.% to 50 wt.%, preferably in a range from 2 wt.% to 40 wt.% of the four-component polymerizable monomer composition (all polymerizable components). If the amount of the component A is less than 19 wt.%, the effect to be favorably exhibited by the component A is insufficient. If the amount of the component A exceeds 69 wt.%, the total amount of the component A and the component D undesirably exceeds the upper limit of 70 wt.%. If the amount of the component D is less than 1 wt.%, the effect to be favorably exhibited by the component D such as the improvement of compatibility is not attained. If the amount of the component D exceeds 50 wt.%, on the other hand, the contact lens is undesirably given the olephilicity (lipophilicity). Like a contact lens formed of the conventional copolymer of the silicon-containing macromonomer and the dimethyl acrylamide, the contact lens to which the olephilicity (lipophilicity) is given is likely to be stained with oil. If such a contact lens is immersed in oils and fats such as oleic acid, the contact lens is considerably swollen with the oils and fats. Accordingly, the oily deposits such as the lipid included in the tear fluid tends to adhere to the contact lens during wearing of the contact lens on the lens wearer's eye.

For the same reasons as described above with respect to the three-component polymerizable monomer composition, the amount of the component B included in the four-component polymerizable monomer composition is held in a range from 10 wt.% to 70 wt.%, preferably in a range from 15 wt.% to 65 wt.% of the polymerizable monomer composition, while the amount of the component C included in the four-component polymerizable monomer composition is held in a range from 1 wt.% to 50 wt.%, preferably in a range from 2 wt.% to 45 wt.% of the polymerizable monomer composition.

The four-component polymerizable monomer composition which at least includes the four components A, B, C, and D is copolymerized to provide a polymeric material. The lens formed of the obtained polymeric material is subjected to a hydration treatment, for thereby providing the intended water-absorptive contact lens according to the present invention. Owing to the addition of the prescribed amount of the component D, the polymerizable components of the four-component polymerizable monomer composition can be uniformly mixed with each other, so that the contact lens to be obtained is homogeneous.

Any of the above-described two-component, three-component, and four-component polymerizable monomer compositions which at least include the component A and the component B described above may further include, as needed, various known additives such as a crosslinking agent, a reinforcing monomer as a reinforcing agent, and a hydrophilicity monomer as a hydrophilicity agent.

The crosslinking agent is added to improve the mechanical strength of the contact lens and permit the contact lens to maintain its shape with high stability. The crosslinking agent is suitably used depending upon the kind of the component B (i.e, the silicon-containing macromonomer). Where the component B has a multiplicity of polymerizable groups in each molecule, the component B itself has the crosslinking effect. In this case, the crosslinking agent need not be used. If the number of the polymerizable groups is relatively small or the amount of the component B to be used is relatively small, it is preferable to use a suitable crosslinking agent for permitting the contact lens to maintain its shape with high stability and exhibit high degrees of mechanical strength and durability.

Any known crosslinking agents having at least two polymerizable groups and used for the conventional lens material may be employed. Examples of the crosslinking agent include: (meth)acrylate of polyhydric alcohol such as ethylene glycol, diethylene glycol, triethylene glycol, propylene glycol, 1,4-butanediol, 1,6-hexanediol, trimethylol propane, or pentaerythritol, divinyl adipate; diallyl adipate; allyl ester vinyl ester adipate; divinyl sebacate; diallyl sebacate, allyl ester vinyl ester sebacate; vinyl ester or allyl ester of polybasic carboxylic acid such as oxalic acid, malonic acid, maleic acid, methylmalonic acid, succinic acid, dimethylmalonic acid, ethylmalonic acid, methylsuccinic acid, glutaric acid, dimethylsuccinic acid, isopropylmalonic acid, methylglutaric acid, methyladipic acid, pimelic acid, suberic acid, di-n-propylmalonic acid, 1,9-nonanedicarboxylic acid, 1,10-decanedicarboxylic acid, 1,3-phenylenediacetic acid, phenylsuccinic acid, benzylmalonic acid, 1,2,3-propanetricarboxylic acid, 1,3,5-pentanetricarboxylic acid, or 1,2,3,4-butanetetracarboxylic acid. In view of the solubility, it is preferable that all carboxyl groups in each of the polybasic carboxylic acids described above are esterified. Examples of the crosslinking agent further include: divinyl benzene; triallyl cyanurate; triallyl isocyanurate; diethylene glycol bisallyl carbonate; triallyl ester of trimellitic acid; allyl ether; diallyl ether of alkylene glycol or polyalkylene glycol; divinyl ether of alkylene glycol or polyalkylene glycol; allyl ether vinyl ether of alkylene glycol or polyalkylene glycol; diallylidene pentaerythritol; 1,3,5-trivinyl-1,3,5-trimethylcyclotrisiloxane. At least one of those known crosslinking agents is suitably selected.

The crosslinking agent is included in an amount of 0.0005 to 10 parts by weight per 100 parts by weight of the two-component, three-component, or four-component polymerizable monomer composition. In a case where it is needed to use the crosslinking agent, the amount of the cross linking agent less than 0.0005 part by weight is insufficient to provide the effect of addition of the crosslinking agent. Namely, if the amount of the crosslinking agent is less than 0.0005 part by weight, the contact lens in its water-absorbing state may not keep its shape such as a circular shape with high stability and have a suitable degree of elasticity required by the water-absorbed contact lens. If the amount of the crosslinking agent is excessively large, on the other hand, the number of crosslinking points is excessively large, so that the contact lens tends to be brittle and easily broken.

The reinforcing monomer is used for adjusting the mechanical strength of the contact lens. Where the above-described component B has a multiplicity of polymerizable groups in each molecule, the component B itself has the crosslinking effect, so that the contact lens to be obtained exhibits an excellent resilient rebound property. Where the strength of the contact lens is lowered due to the crosslinking effect of the component B, on the other hand, it is preferable to add the reinforcing monomer to the polymerizable monomer composition.

It is possible to use any known reinforcing monomers conventionally used for the contact lens material. Examples of the reinforcing monomer include vinyl ester or allyl ester of organic carboxylic acid, such as vinyl acetate or allyl propionate, (meth)acrylate or its macromonomer, and styrene derivatives. At least one kind of the known reinforcing monomers is suitably selected.

The reinforcing monomer is included in an amount from 1 part by weight to 20 parts by weight per 100 parts by weight of the two-component, three-component, or four-component polymerizable monomer composition. In a case where the reinforcing monomer is included in the polymerizable monomer composition, the amount of the reinforcing monomer less than 1 part by weight is insufficient to provide a desired degree of the reinforcing effect. If the amount of the reinforcing monomer exceeds 20 parts by weight, the contact lens does not have the intended oxygen permeability or a sufficiently high degree of water content.

The hydrophilicity monomer is used for giving the hydrophilicity (hydrophilic property) to the contact lens. The hydrophilicity monomer is suitably used where the contact lens obtained by copolymerization of the two-component, three-component, or four-component polymerizable monomer composition and having the intended water content has insufficient hydrophlicity or wettability on its surface, where the compatibility of the polymerizable monomer components is insufficient, where the elasticity of the contact lens is excessively large or the affinity of the polymeric material for the contact lens, with respect to the material of the vessel used for polymerization or the material of the molding vessel is excessively large.

It is possible to use various known hydrophilic monomers conventionally used for the lens material. Examples of the hydrophilicity monomer include mono (meth)acrylate of polyhydric alcohol such as ethylene glycol, propylene glycol, or 1,6-hexane diol; N-(meth)acryloyl morpholine, N-(meth)acryloyl piperidine, N-vinyl piperidone, N-vinyl-N-methyl acetamide, N-vinyl-N-ethyl acetamide, N-vinyl-N-methyl formamide, and N-methyl-$\alpha$-methylene-2-pyrrolidone. At least one kind of those known hydrophilicity monomers is suitably selected.

The hydrophilicity monomer is included in the polymerizable monomer composition in an amount from 1 part

by weight to 30 parts by weight per 100 parts by weight of the polymerizable monomer composition. If the amount of the hydrophilic monomer is less than 1 part by weight, a sufficiently high degree of hydrophilic effect may not be obtained. If the amount of the hydrophilic monomer exceeds 30 parts by weight, the compatibility of the polymerizable monomer components may be deteriorated or the desired oxygen permeability may not be attained.

The two-component, three-component, or four-component polymerizable monomer composition described above may further include, as needed, various additives conventionally used for the contact lens. For instance, a polymerizable UV-absorbing monomer or pigment, or a UV-absorbing pigment may be added to the polymerizable monomer composition for the purpose of imparting the UV-absorbing property to the contact lens or coloring the contact lens, so that such UV-absorbing monomer or pigment is introduced into the polymeric (copolymer) material as the constituent component of the lens. It is needless to mention that each additive should not inhibit the effect of the invention and is added in an amount which does not inhibit the effect of the invention.

For producing the intended water-absorptive contact lens by using the polymerizable monomer composition which includes various components described above, the polymerizable monomer composition is copolymerized according to a known manner.

More specifically described, the polymerizable monomer composition is polymerized, for instance, by: (1) a heat-polymerization method wherein the polymerizable monomer composition to which a polymerization initiator has been added is heated for polymerization, with its temperature being raised gradually or in steps from room temperature up to about 130°C; (2) a photo-polymerization method wherein the polymerizable monomer composition to which a sensitizer has been added is exposed to a suitable light such as an ultraviolet light for polymerization; or (3) a method wherein the heat-polymerization and the photo-polymerization are combined. As the polymerization system, it is preferable to employ a bulk polymerization method. Other polymerization systems may be employed.

Where the polymerizable monomer composition is heat-polymerized, the polymerization initiator is used. Where the polymerizable monomer composition is polymerized by exposure to the light such as the UV light, the sensitizer is used. The polymerizable monomer composition may be photo- and/or heat-polymerized, by using the sensitizer and/or the polymerization initiator.

Examples of the polymerization initiator include azobisisobutylonitrile, azobisdimethylvaleronitrile, t-butylhydro peroxide, and benzoyl peroxide. Examples of the sentitizer include diethoxy acetophenone, 4-(2-hydroxyethoxy) phenyl-(2-hydroxy-2-propyl)ketone, 2-hydroxy-2-methyl-1-phenylpropyl-1-one, 2-methyl-2-morpholino(4-thiomethylphenyl)propyl-1-one, 1-hydroxycyclohexyl-phenylketone, 2-benzyl-2-dimethylamino-4-morpholinophenyl-butanone, and benzyl dimethylketal.

One or more of those polymerization initiators or those sensitizers may be suitably selected. The amount of the polymerization initiator or the sensitizer to be used is in a range from 0.001 part by weight to 5 parts by weight, preferably in a range from 0.002 part by weight to 3 parts by weight, per 100 parts by weight of the all polymerizable components. If the amount of the polymerization initiator or the sensitizer is smaller than 0.001 part by weight per 100 parts by weight of the all polymerizable components, the polymeric material to be obtained does not solidify due to a large amount of residual monomers. If the amount of the polymerization initiator or the sensitizer exceeds 5 parts by weight per 100 parts by weight of the all polymerizable components, the polymeric material does not have a sufficiently large average molecular weight. In this case, the contact lens does not have a required strength, or the color of the lens turns yellow.

The contact lens may be produced according to any known methods which include: (1) a mechanical processing method wherein a bar-, block-, or plate-shaped blank (polymer) obtained by polymerization of the polymerizable monomer composition in a suitable mold or vessel is formed into a desired shape by cutting or grinding; (2) a molding method wherein the polymerizable monomer composition is polymerized in a mold cavity of a mold assembly that gives the configuration of the intended contact lens; and (3) a combination of the mechanical processing method and the molding method. Among those methods, the molding method is preferably employed to effectively reduce the cost of manufacture of the lens.

The contact lens formed of the polymeric (copolymer) material and produced as described above is subjected to a hydration treatment wherein the contact lens is immersed in water, for thereby providing the water-absorptive contact lens whose water content is in a range from 10% to 60% according to the present invention. It is needless to mention that the thus produced water-absorptive contact lens is subjected to a sterilization treatment, etc., for assuring the living bodies of a sufficiently high degree of safety.

After the contact lens has been formed by the molding method or the mechanical processing method described above, the contact lens in its dry state or water-absorbing state may be subjected to a surface treatment by using a plasma gas, a UV ray, an excimer laser, an electron beam, etc., or a surface-cotating treatment by using a hydrophicity agent such as 2-hydroxyethyl (meth)acrylate, (meth)acrylic acid, methoxytriethylene glycol (meth)acrylate, dimethyl acrylamide, etc. Thus, the surface of the contact lens is made hydrophilic, so that the contact lens has excellent surface wettability.

The present water-absorptive contact lens is formed of the polymeric material which is obtained by copolymerization of the polymerizable monomer composition which at least includes the above-described components A and B as essential components. The components A and B are included in and bonded to the polymeric material. Accordingly, the present contact lens has a water content in a range from 10% to 60% and exhibits excellent oxygen permeability, without using the conventional N-vinylpyrrolidone which has a risk of causing a cancer. In addition, the contact lens formed of the polymeric material does not suffer from a large amount of extracted components after the contact lens has been subjected to the boiling treatment, so that the contact lens assures the lens wearer of a sufficiently high degree of safety. Further, the contact lens is not considerably swollen with the oils and fats such as oleic acid even if the contact lens is immersed in the oils and fats. Accordingly, the contact lens is not likely to be stained with the oily deposits.

EXAMPLES

There will be described some examples of the present invention to further clarify the present invention. It is, however, to be understood that the present invention is not limited to the details of the following examples and the presently preferred embodiments described above, but may be embodied with various changes, modifications and improvements, which may occur to those skilled in the art, without departing from the spirit and scope of the present invention defined in the attached claims.

As the above-described components A through D, the following compounds indicated in TABLE 1 were prepared.

TABLE 1

| Component | Abbreviations | Compound |
|---|---|---|
| component A | MTGA | Methoxytriethylene glycol acrylate |
| component B | MAUS | Both of "MAUS" and "B-MAUS" are silicon-containing macromonomers having urethane bonds, represented by the following formula (IX) and having respective number average molecular weights, weight average molecular weights, and molecular weight distribution values indicated in the following TABLE 2 |
| | B-MAUS | |
| component C | SK-5021 | tris(trimethylsiloxy)silylpropylacrylate |
| | 17FOEA | (perfluorooctyl)ethylacrylate |
| component D | DMAA | dimethyl acrylamide |

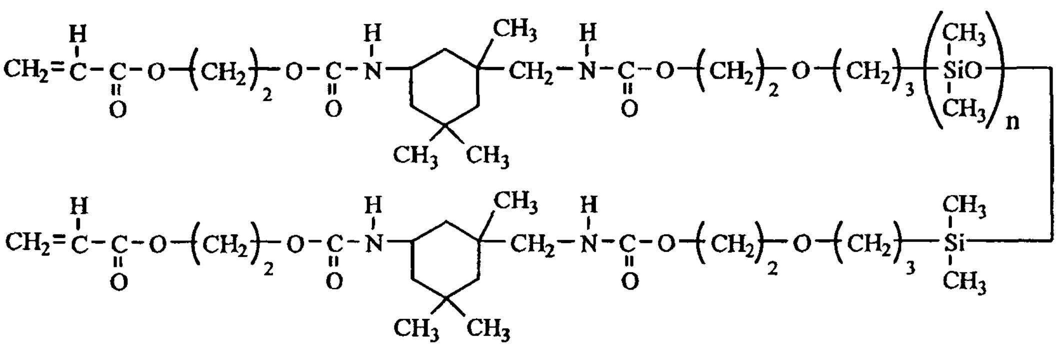

........ (IX)

TABLE 2

| | Number average molecular weight | Weight average molecular weight | Molecular weight distribution |
|---|---|---|---|
| MAUS | 5600 | 8400 | 1.50 |
| B-MAUS | 6900 | 11200 | 1.62 |

The MAUS and the B-MAUS (as the component B) represented by the above formula (IX) were produced according to a method similar to that disclosed in Example 1 of JP-A-2001-72739. As polydimethylsiloxane which is used for preparing the component B, "KF-6002" (having a polymerization degree of 40 and a number average molecular weight of 3100, and available from Shin-Etsu Chemical Co., Ltd., Japan) was used for the MAUS, as in the Example 1 of the Publication, while "KF-6003" (having a polymerization degree of 74 and a number average molecular weight of 5600, and available from Shin-Etsu Chemical Co., Ltd., Japan) was used for the B-MAUS.
For comparison, there was prepared N-vinylpyrrolidone (N-VP). As the sensitizer, there was prepared 2-hydroxy-2-methyl-1-phenyl-propane-1-one (Darocure 1173).

Preparation and polymerization of polymerizable monomer composition

Various polymerizable monomer compositions according to Examples Nos. 1-5 of the present invention and Comparative Examples Nos. 1-6 were prepared to have respective compositions as indicated in the following TABLE 3. There was prepared mold assemblies each consisting of a female mold and a male mold formed of polypropylene. The sensitizer (Darocure 1173) was added to the respective polymerizable monomer compositions, and the polymerizable monomer compositions were put into the respective female molds. Then, the female molds were assembled with the respective male molds, so that the mold cavities of the respective mold assemblies were filled with the respective polymerizable monomer compositions according to the Examples Nos. 1-5 of the present invention and the Comparative Examples Nos. 1-6. The UV light having an intensity of 10 $mW/cm^2$ was applied to the polymerizable monomer compositions by using a high-pressure mercury lamp (2 kW). The monomer compositions were exposed to the UV light for 15 minutes, so that the monomer compositions were polymerized. Subsequently, the male and female molds were separated away from each other. The polymerized products in the form of contact lenses were immersed in ethanol, and the contact lenses swollen with ethanol were subsequently removed from the respective molds. Each of the contact lenses was immersed in 60% ethanol aqueous solution for one hour, and subsequently 30% ethanol aqueous solution for one hour. Then, each contact lens was immersed in distilled water for one hour. After each contact lens was dried at room temperature, the contact lens was subjected to plasma radiation [$O_2$, 0.5 torr (70 Pa), 50W, 45s] by using a plasma device "PA-102AT" available from KYOTO DENSHI KEISOKU KABUSHIKI KAISHA, Japan, and immersed in distilled water overnight.
Thereafter, each of the contact lenses which had been subjected to the plasma surface treatment was boiled in water for two hours. Then, each contact lens was put into a heat-resistant bottle filled with water. After the bottle was capped, the contact lens in the bottle was subjected to high-pressure steam sterilization at 121°C for 20 minutes. All of the contact lenses except the contact lens according to the Comparative Example No. 5 were transparent without suffering from whitening or clouding.

TABLE 3

| | | No.1 | No. 1* | No. 2 | No. 2* | No. 3 | No. 3* | No. 4 | No. 4* | No. 5 | No. 5* | No. 6* |
|---|---|---|---|---|---|---|---|---|---|---|---|---|
| Contents [parts by weight] | MTGA | 35 | — | 50 | — | 41 | — | 30 | — | 15 | — | — |
| | MAUS | 65 | 65 | 20 | 20 | — | — | — | — | — | — | 25 |
| | B-MAUS | — | — | — | — | 20 | 20 | 23 | 23 | 15 | 15 | — |
| | SK-5021 | — | — | 30 | 30 | 24 | 24 | 17 | 17 | 25 | 25 | 25 |
| | 17FOEA | — | — | — | — | 15 | 15 | 15 | 15 | 15 | 15 | — |
| | DMAA | — | 35 | — | 50 | — | 41 | 15 | 45 | 30 | 45 | 10 |
| | N-VP | — | — | — | — | — | — | — | — | — | — | 40 |
| | Darocure 1173 | 0.4 | 0.4 | 0.4 | 0.4 | 0.4 | 0.4 | 0.4 | 0.4 | 0.4 | 0.4 | 0.4 |
| Water content [%] | | 12 | 24 | 28 | 47 | 20 | 37 | 37 | 43 | 39 | 45 | 41 |
| Difference of consumption amounts of $KMnO_4$ [ml] | | 0.4 | | 0.2 | | 0.2 | | 0.2 | | 0.2 | | 3.2 |
| Presence of whitening | | NO | NO | NO | NO | NO | NO | NO | NO | NO | YES | NO |
| Swelling ratio [%] | | 1.3 | 1.7 | 1.7 | 2.4 | 1.4 | 2.4 | 1.9 | 2.4 | 2.3 | 2.6 | |

*: according to Comparative Examples

Measurement of water content

Each of the thus obtained contact lenses (according to the Examples Nos. 1-5 of the present invention and the Comparative Examples Nos. 1-6) that had been subjected to the high-pressure steam sterilization treatment described above was immersed in water kept at 20°C for two hours. Subsequently, the contact lens was wiped with moisture-absorbing paper to remove redundant aqueous component therefrom. The weight ($W_1$) of the contact lens in its water-absorbing state was measured. Subsequently, the contact lens was left in a drier kept at 60°C overnight. The weight ($W_2$) of the contact lens in its dry state was measured. Based on the weight ($W_1$) of the contact lens in the water-absorbing state and the weight ($W_2$) of the contact lens in the dry state, the water content was calculated according to the following equation. The water content of each contact lens is indicated in the above TABLE 3.

$$\text{Water content (wt.\%)} = [(W_1 - W_2)/W_1] \times 100$$

Elution test

Each of the contact lenses (according to the Examples Nos. 1-5 of the present invention and the Comparative Example No. 6) which had been subjected to the high-pressure steam sterilization treatment was dried, and subjected to an elution test based on "Notification No. 302 by Ministry of Health and Welfare of Japan: Standards for vision correction contact lens, IV. Elution test, (3) Eluted substances by water: potassium permanganate reducing substance". There was obtained a difference between the amount of the potassium permanganate ($KMnO_4$) solution consumed in a test solution in which the components released or extracted from the contact lens are present, and the amount of the potassium permanganate solution in water as control in which no extracted components are present. The results are indicated in the above TABLE 3. The criterion of the difference of the consumption amounts of $KMnO_4$ is not larger than 2.0 mL.

Evaluation of resistance to oily deposits

Each of the contact lenses in the water-absorbing state (according to the Examples Nos. 1-5 of the present invention and the Comparative Examples Nos. 1-5) was left in a drier kept at 60°C overnight. The size ($S_1$) of the contact lens in the dry state was measured. Subsequently, the contact lens was immersed in oleic acid kept at 35°C overnight, and the size ($S_2$) of the contact lens was measured. Based on the size (Si) of the contact lens in the dry state and the size ($S_2$) of the contact lens after immersion in the oleic acid, a ratio of swelling of the contact lens with the oleic acid was calculated according to the following equation. The results of calculation are indicated in the above TABLE 3.

$$\text{Ratio of swelling (\%)} = S_2/S_1$$

It is apparent from the results indicated in the above TABLE 3 that, in the contact lenses (according to the Comparative Examples Nos. 1-5) which do not include the component A (MTGA) as the essential polymerizable component in the present invention and in which the water-absorptive property is given simply by the dimethyl acrylamide, the ratios of swelling of the contact lenses with the oleic acid are higher than those in the present contact lenses (according to the Examples Nos. 1-5). Accordingly, it is recognized that those contact lenses according to the Comparative Examples Nos. 1-5 do not have a resistance to the oily deposits. In the contact lens according to the Comparative Example No. 6 which does not include the component A (MTGA) and in which the water-absorptive property is given by the dimethyl acrylamide and the N-vinylpyrrolidone, the difference of the consumption amounts of the potassium permanganate (the amount of the components released or extracted from the contact lens) was larger than the criterion.

In contrast, in the contact lenses according to the Examples Nos. 1-5 of the present invention, the amounts of the components released or extracted therefrom were relatively small. Thus, it is confirmed that the contact lenses according to the present invention assures a high degree of safety. Further, each of the contact lenses according to the Examples Nos. 1-5 of the present invention is not considerably swollen with the oleic acid even after it was immersed in the oleic acid, so that the contact lens according to the present invention is not likely to be stained with the oily deposits during wearing on the eye.

## Claims

1. A water-absorptive contact lens whose water content is in a range from 10% to 60% and which is formed of a polymeric material obtained by copolymerization of a polymerizable monomer composition that includes: (A) 20 to 70 wt.% of alkoxypolyethylene glycol (meth)acrylate having at least three ethylene glycol units, and (B) 30 to 80 wt.% of a silicon-containing macromonomer.

2. A water-absorptive contact lens whose water content is in a range from 10% to 60% and which is formed of a polymeric material obtained by copolymerization of a polymerizable monomer composition that includes: (A) 20 to 70 wt.% of alkoxypolyethylene glycol (meth)acrylate having at least three ethylene glycol units, (B) 10 to 70 wt. % of a silicon-containing macromonomer, and (C) 1 to 50 wt.% of a silicon-containing monomer different from the slilicon-containing macromonomer, and/or fluorine-containing alkyl(meth)acrylate.

3. A water-absorptive contact lens whose water content is in a range from 10% to 60% and which is formed of a polymeric material obtained by copolymerization of a polymerizable monomer composition that includes: (A) 19 to 69 wt.% of alkoxypolyethylene glycol (meth)acrylate having at least three ethylene glycol units, (B) 10 to 70 wt. % of a silicon-containing macromonomer, (C) 1 to 50 wt.% of a silicon-containing monomer different from the slilicon-containing macromonomer, and/or fluorine-containing alkyl(meth)acrylate, and (D) 1 to 50 wt.% of dimethyl acrylamide, a total amount of the alkoxypolyethylene glycol (meth)acrylate having at least three ethylene glycol units and the dimethyl acrylamide being in a range from 20 wt.% to 70 wt.%.

4. A water-absorptive contact lens according to claim 3, wherein the dimethyl acrylamide is included in the polymerizable monomer composition in an amount of 2 to 40 wt.%.

5. A water-absorptive contact lens according to any one of claims 1 to 4, wherein the alkoxypolyethylene glycol (meth) acrylate has three to five ethylene glycol units.

6. A water-absorptive contact lens according to any one of claims 1 to 5, wherein the alkoxypolyethylene glycol (meth) acrylate having at least three ethylene glycol units is methoxy triethylene glycol acrylate.

7. A water-absorptive contact lens according to any one of claims 1 to 6, wherein the silicon-containing macromonomer is a polysiloxane macromonomer represented by the following formula (I):

$$A^1—U^1—(—S^1—U^2—)_n—S_2—U^3—A^2 \qquad (I)$$

wherein $A^1$ is a group represented by the following formula (II):

$$Y^{21}—Z^{21}—R^{31}— \qquad (II)$$

wherein $Y^{21}$ is an acryloyl group, a vinyl group or an allyl group, $Z^{21}$ is an oxygen atom or a direct bond, and $R^{31}$ is a direct bond or a linear, a branched, or an aromatic alkylene group having 1 to 12 carbon atoms;
$A^2$ is a group represented by the following formula (III):

$$—R^{34}—Z^{22}—Y^{22} \qquad (III)$$

wherein $Y^{22}$ is an acryloyl group, a vinyl group, or an allyl group, $Z^{22}$ is an oxygen atom or a direct bond, and $R^{34}$ is a direct bond or a linear, a branched, or an aromatic alkylene group having 1 to 12 carbon atoms, where $Y^{21}$ in the formula (II) and $Y^{22}$ in the formula (III) may be the same or different;
$U^1$ is a group represented by the following formula (IV):

$$—X^{21}—E^{21}—X^{25}—R^{32}— \qquad (IV)$$

wherein each of $X^{21}$ and $X^{25}$ is independently selected from a direct bond, an oxygen atom, and an alkylene glycol

group, $E^{21}$ is -NHCO- group (in this case, $X^{21}$ is a direct bond, $X^{25}$ is an oxygen atom or an alkylene glycol group, and $E^{21}$ and $X^{25}$ form a urethane bond), -CONH- group (in this case, $X^{21}$ is an oxygen atom or an alkylene glycol group, $X^{25}$ is a direct bond, and $E^{21}$ and $X^{21}$ forms a urethane bond), or a divalent group derived from a diisocyanate selected from the group consisting of a saturated or an unsaturated aliphatic diisocyanate, an alicyclic diisocyanate, and an aromatic diisocyanate (in this case, each of $X^{21}$ and $X^{25}$ is independently selected from an oxygen atom and an alkylene glycol group, and $E^{21}$ forms two urethane bonds between $X^{21}$ and $X^{25}$), and $R^{32}$ is a linear or a branched alkylene group having 1 to 6 carbon atoms;
each of $S^1$ and $S^2$ is independently a group represented by the following formula (V):

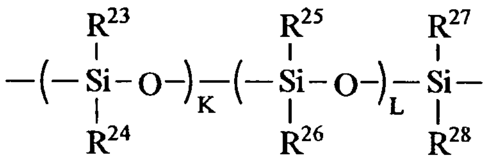
........ (V)

wherein each of $R^{23}$, $R^{24}$, $R^{25}$, $R^{26}$, $R^{27}$, and $R^{28}$ is independently an alkyl group having 1 to 6 carbon atoms, a fluorinated alkyl group, or a phenyl group, K is an integer of 1 to 1500, L is 0 or an integer of 1 to 1499, and K+L is an integer of 1 to 1500;
$U^2$ is a group represented by the following formula (VI):

$$—R^{37}—X^{27}—E^{24}—X^{28}—R^{38}— \quad (VI)$$

wherein each of $R^{37}$ and $R^{38}$ is independently a linear or a branched alkylene group having 1 to 6 carbon atoms, each of $X^{27}$ and $X^{28}$ is independently an oxygen atom or an alkylene glycol group, $E^{24}$ is a divalent group derived from a diisocyanate selected from the group consisting of a saturated or an unsaturated aliphatic diisocyanate, an alicyclic diisocyanate, and an aromatic diisocyanate (in this case, $E^{24}$ forms two urethane bonds between $X^{27}$ and $X^{28}$);
$U^3$ is a group represented by the following formula (VII);

$$—R^{33}—X^{26}—E^{22}—X^{22}— \quad (VII)$$

wherein $R^{33}$ is a linear or a branched alkylene group having 1 to 6 carbon atoms, each of $X^{22}$ and $X^{26}$ is independently selected from a direct bond, an oxygen atom, and an alkylene glycol group, $E^{22}$ is -NHCO- group (in this case, $X^{22}$ is an oxygen atom or an alkylene glycol group, $X^{26}$ is a direct bond, and $E^{22}$ and $X^{22}$ form a urethane bond), -CONH- group (in this case, $X^{22}$ is a direct bond, $X^{26}$ is an oxygen atom or an alkylene glycol group, and $E^{22}$ and $X^{26}$ form a urethane bond), or a divalent group derived from a diisocyanate selected from the group consisting of a saturated or an unsaturated aliphatic diisocyanate, an alicyclic diisocyanate, and an aromatic diisocyanate (in this case, each of $X^{22}$ and $X^{26}$ is independently an oxygen atom or an alkylene glycol group, and $E^{22}$ forms two urethane bonds between $X^{22}$ and $X^{26}$); and n is 0 or an integer of 1 to 10

**8.** A water-absorptive contact lens according to any one of claims 1 to 7, wherein the polymerizable monomer composition further includes a crosslinking agent.

**9.** A water-absorptive contact lens according to any one claims 1 to 8, wherein the polymerizable monomer composition further includes at least one reinforcing monomer.

**10.** A water-absorptive contact lens according to claim 9, wherein the at least one reinforcing monomer is included in the polymerizable monomer composition in an amount of 1 to 20 parts by weight per 100 parts by weight of the polymerizable monomer composition.

**11.** A water-absorptive contact lens according to any one claims 1 to 10, wherein the polymerizable monomer composition further includes at least one hydrophilicity monomer.

**12.** A water-absorptive contact lens according to claim 11, wherein the at least one hydrophilicity monomer is included in the polymerizable monomer composition in an amount of 1 to 30 parts by weight per 100 parts by weight of the polymerizable monomer composition.

**13.** A method of producing a water-absorptive contact lens according to any one of claims 1 to 12, the method comprising the steps of

preparing a polymerizable monomer composition which at least includes (A) alkoxypolyethylene glycol (meth) acrylate having at least three ethylene glycol units and (B) a silicon-containing macromonomer;
introducing the polymerizable monomer composition into a vessel or a mold cavity;
copolymerizing the polymerizable monomer composition by photo-polymerization or heat-polymerization to obtain a copolymer; and
subjecting the obtained copolymer to a hydration treatment.